# FASCICULE DE BREVET EUROPEEN

(11) **EP 3 816 734 B1**
(45) Date de publication et mention de la délivrance du brevet: **15.07.2026**
(21) Numéro de dépôt: 19206954.0
(22) Date de dépôt: 04.11.2019
(51) Int. Cl.: G04C 10/02, G04G 17/04

(54) **MONTRE ELECTRONIQUE A CELLULE SOLAIRE**
ELEKTRONISCHE UHR MIT SOLARZELLE
ELECTRONIC WATCH WITH SOLAR CELL

(43) Date de publication de la demande: 05.05.2021
(73) Titulaire: ETA SA Manufacture Horlogère Suisse, 2540 Grenchen (CH)
(72) Inventeur: SCHENK, Marc, 2525 Le Landeron (CH); JUFER, Martin, 4917 Melchnau (CH)
(74) Mandataire: ICB SA

(56) Documents cités:
- CH-A3- 6 221 51G
- US-A- 4 276 629
- US-A- 4 666 313

## Description

### Domaine technique

La présente invention se rapporte à une montre électronique pourvue d'une cellule photovoltaïque.

### État de la technique

Les montres électroniques à cellule photovoltaïque sont bien connues. La cellule est montée en dessous du verre de la montre, de sorte que la cellule puisse capturer l'énergie photovoltaïque pendant le port de la montre. L'énergie solaire est transformée en énergie électrique pour alimenter les composants électriques et électroniques de la montre, tel qu'un moteur de mouvement d'aiguilles et/ou une batterie rechargeable.

Les cellules photovoltaïques utilisées dans certains types de montre de haute gamme consistent d'un substrat fragile, souvent en verre, qui porte des couches en matériau semi-conducteur. Le substrat doit tenir aux contraintes induites pendant l'assemblage ainsi que le cycle de vie de la montre. La résistance aux chocs est particulièrement importante.

Les documents JPH11118952 et JP4275804 décrivent des montres dans lesquelles une cellule photovoltaïque est maintenue en contact avec un module moteur de la montre par un support latéral annulaire. Le support latéral étant limitée à la périphérie de la cellule, le risque de décohésion entre la cellule et le module moteur lors de chocs reste important. De plus, le support latéral est un composant qui complique la construction de la montre, et qui peut rendre le démontage difficile. Le document JPH08166469 décrit la fabrication des couches d'une cellule photovoltaïque sur un substrat en métal, pour fabriquer un cadran de montre avec la cellule intégrée dans le cadran. Mais cette solution nécessite toujours des moyens de fixation latéraux du cadran. De plus, cette solution n'est pas applicable dans le cas le plus courant, dans lequel on intègre une cellule photovoltaïque préfabriquée pendant le processus d'assemblage du mouvement de la montre.

US 4 666 313 A décrit une montre électronique à cellule photovoltaïque comprenant une plaque de support portant les cellules sur sa face avant et un mécanisme fixé sur sa face arrière. La fixation est réalisée par des vis passant par la périphérie du mécanisme et s'engageant dans des douilles filetées montées sur la plaque. US 4 276 629 A concerne une montre solaire visant une construction mince et résistante aux chocs. La montre comprend une plaque de base, une feuille isolante flexible portant les cellules et un module monté en dessous. Un renfort périphérique (dial ring) est prévu pour limiter les déformations. L'architecture est multicouche et orientée vers la compacité et la résistance mécanique.

### Résumé de l'invention

La présente invention vise à fournir une montre électronique à cellule photovoltaïque qui ne souffre pas des inconvénients décrits ci-dessus. Ce but est atteint par un mouvement d'horlogerie et par une montre selon les revendications annexées.

Un mouvement d'horlogerie selon l'invention est défini dans la revendication 1. Les modes de réalisation préférés sont définis dans les revendications 2 à 7.

D'autres caractéristiques et avantages de la présente invention apparaîtront dans la description suivante de modes de réalisation préférés, présentés à titre d'exemple non limitatif en référence aux dessins annexés

### Brève description des figures

La figure 1 représente un mouvement d'horlogerie pour une montre électronique à cellule photovoltaïque selon une forme d'exécution de l'invention.
Les figures 2a à 2k représentent différentes étapes de la méthode d'assemblage d'un mouvement et d'une montre selon une forme d'exécution de l'invention.

### Description détaillée de formes d'exécution de l'invention

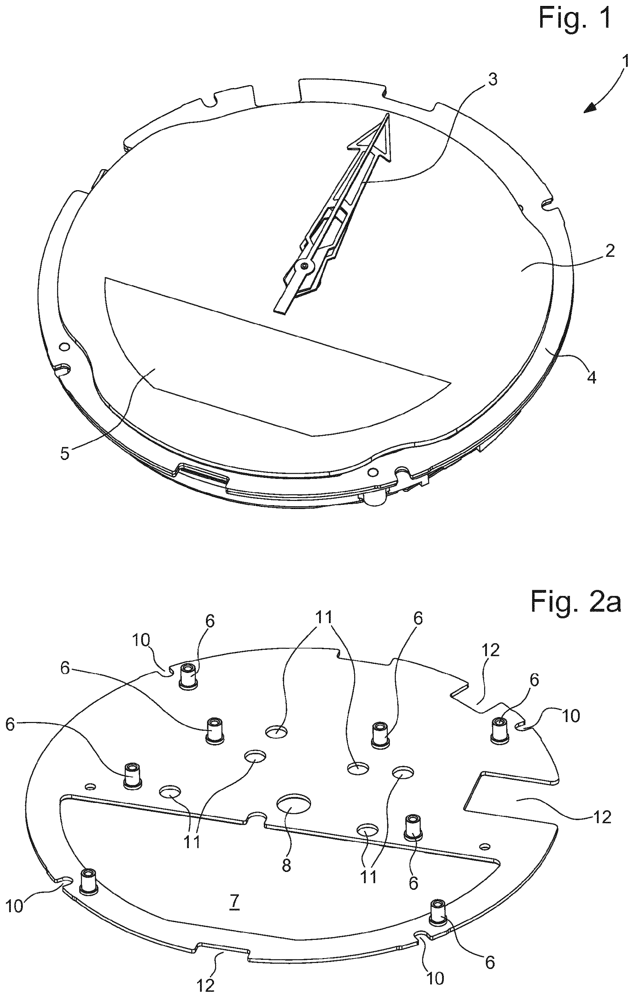

Le mouvement 1 représenté à la figure 1 comprend une cellule photovoltaïque 2 montée en dessous des aiguilles 3 de la montre à assembler, et fixée à la surface supérieure d'une plaque de support rigide 4. Le mouvement 1 comprend en outre un écran digital 5. La figure 2a représente la plaque de support 4 selon cette forme d'exécution particulière. De manière caractéristique pour l'invention, la plaque est pourvue d'une pluralité d'écrous 6 qui sont solidarisés à la surface inférieure de la plaque 4, i.e. la surface opposée à la surface à laquelle la cellule photovoltaïque 2 sera fixée. Les écrous sont de préférence des écrous cylindriques. Les écrous 6 peuvent être fixés sur la plaque 4 par soudage ou collage, en fonction du matériau de la plaque 4. Ce matériau peut être un matériau métallique La plaque spécifique 4 représentée à la figure 2a est pourvue d'une fenêtre 7 pour l'écran digital, d'un trou central 8 pour le passage des axes de rotation des aiguilles, et de plusieurs ouvertures et encoches. Les encoches rondes 10 serviront de points de montage du mouvement dans une carrure (voir ultérieurement), et les ouvertures 11 vont recevoir les têtes de vis du module de moteur (voir également ultérieurement). Les encoches rectangulaires 12 vont servir de passage pour des bandes de connexion électriques et/ou comme marque d'alignement du mouvement dans une carrure de montre.

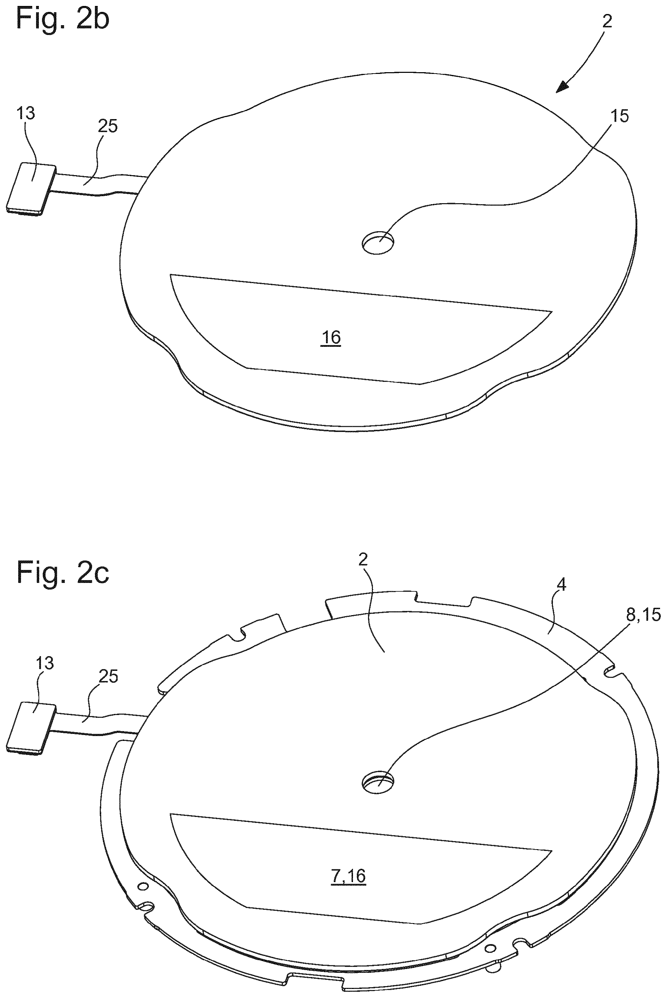

A la figure 2b on voit la cellule photovoltaïque 2 avant d'être assemblée à la plaque rigide 4. La cellule comprend un substrat en verre comprenant des couches minces (Thin Film) en matériau semi-conducteur (non représentées). Le substrat est collé par une colle électro-conductrice à un FPC (Flexible Printed Circuit), comprenant un connecteur 13, par exemple par une connexion électrique flexible 25. Dans le présent contexte, l'ensemble du substrat et du FPC est considéré comme la cellule photovoltaïque 2. La cellule 2 comprend un trou central 15 pour le passage des axes de rotation des aiguilles, ainsi qu'une fenêtre 16 pour l'écran digital.

Comme il est illustré à la figure 2c, la cellule 2 est collée à la surface supérieure de la plaque de support 4, de préférence par une couche adhésive double face, laminée sur la plaque 4. La cellule 2 est centrée sur la plaque 4, de sorte que les ouvertures centrales 8 et 15 ainsi que les fenêtres 7 et 16 sont alignées l'une par rapport à l'autre. La connexion flexible 25 avec le connecteur 13 est positionnée à la hauteur d'une des encoches rectangulaires 12 pourvues sur la périphérie de la plaque 4.

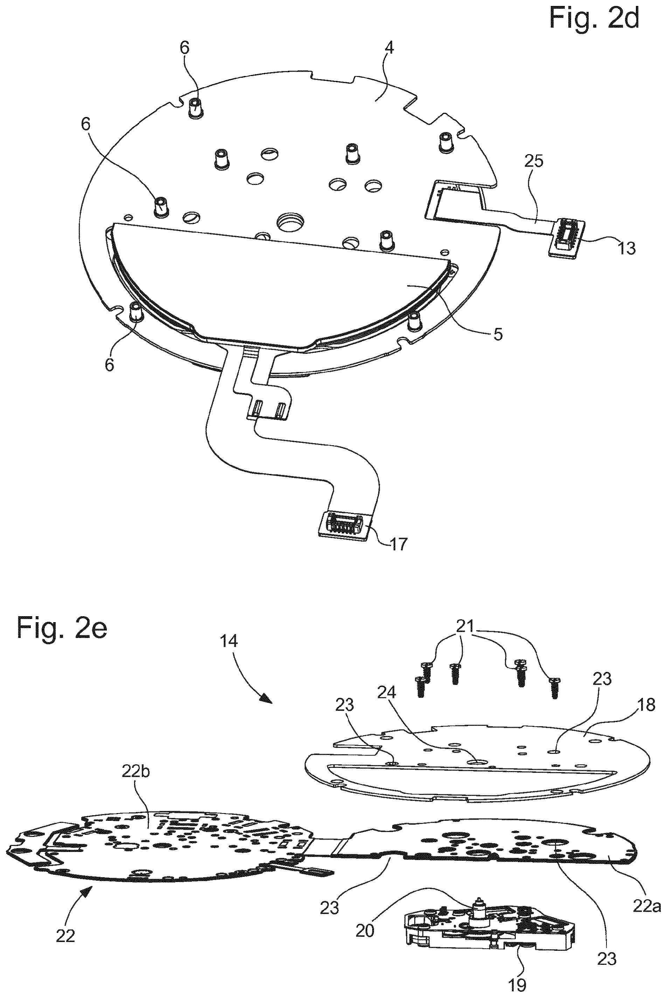

La figure 2d représente le montage de l'écran digital 5 dans l'ouverture créée par les fenêtres 7 et 16. L'écran 5 peut être réalisé comme un assemblage de composants électroniques connus, tels qu'une couche MIP (Memory in Pixel) et une couche de rétroéclairage, pourvus d'un connecteur 17.

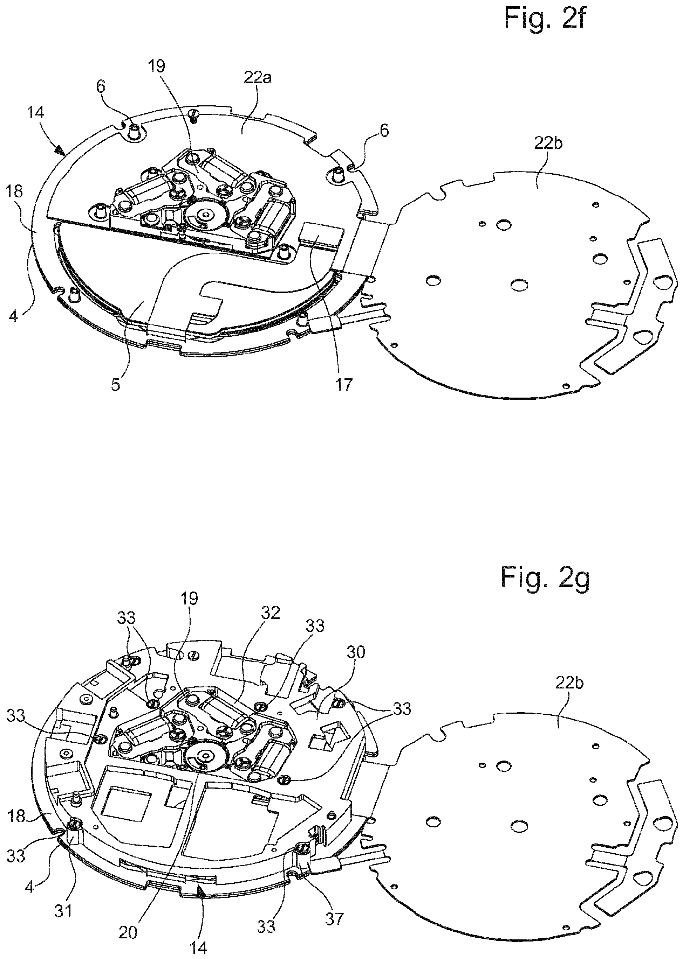

La figure 2e représente l'assemblage du module moteur 14 du mouvement de la figure 1. Une deuxième plaque de support rigide 18 est prévue, qui a le même pourtour que la plaque de support 4 de la cellule photovoltaïque. Comme la plaque de support 4, la deuxième plaque 18 peut être une plaque métallique. Un moteur électrique 19 pourvu des axes de rotation 20 des aiguilles 3 est attaché centralement à la deuxième plaque de support 18 par des vis 21, avec une première partie 22a d'une carte de circuit imprimé (PCB) 22 montée entre le moteur 19 et la deuxième plaque 18. Le PCB 22 comprend une deuxième partie 22b qui peut être pliée sur la première partie 22a montée entre le moteur 19 et la deuxième plaque 18. La deuxième plaque 18 et la première partie 22a du PCB sont pourvus d'ouvertures 23 alignées entre elles (qui correspondent à une seule ouverture quand le module est assemblé), qui correspondent respectivement aux écrous 6 de la première plaque de support 4, de sorte que la surface plane de la deuxième plaque 18 soit positionnée en contact avec la surface inférieure de la première plaque de support 4 sur laquelle les écrous 6 sont montés. En autre mots, les ouvertures 23 sont positionnées et dimensionnées telles que les écrous 6 passent à travers ces ouvertures 23, de sorte que les deux plaques 4 et 18 puissent être positionnées dos-à-dos, voir figure 2f. Les têtes des vis 21 vont se loger dans les ouvertures 11 pourvues dans la plaque de support 4. La deuxième plaque 18 comprend un trou central 24 aligné aux trous central 8 et 15 dans la cellule 2 et dans la première plaque de support 4, quand les deux plaques 4 et 18 sont assemblées. Les trous centraux alignés entre eux permettent l'accès aux axes de rotation 20 du moteur 19, du côté supérieur de l'assemblage.

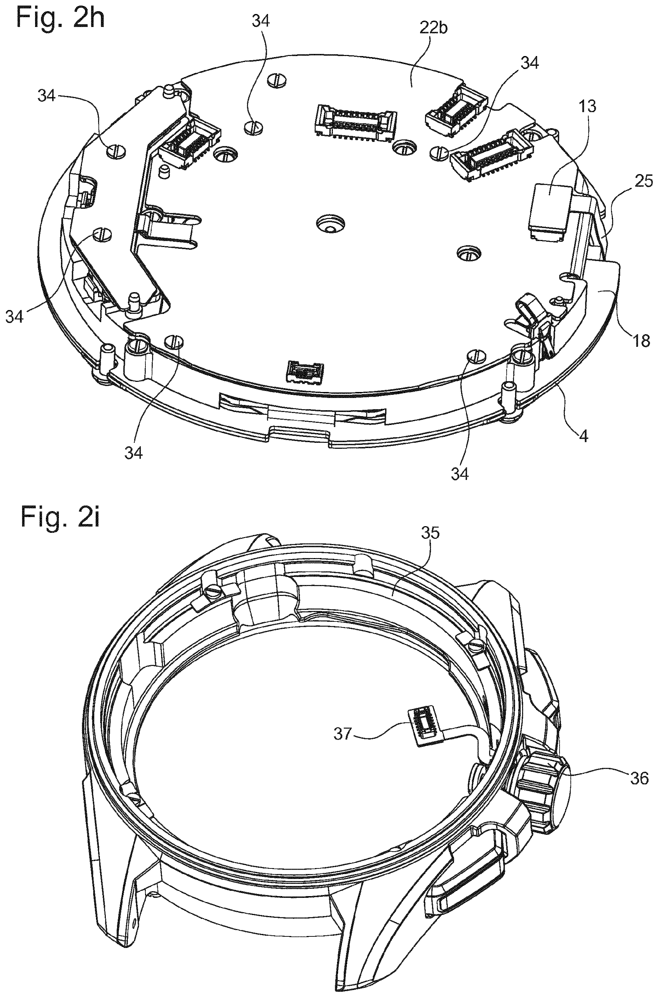

Le connecteur 17 de l'écran 5 est branché dans une prise pourvue dans la première partie 22a du PCB 22. Une entretoise 30 est ensuite positionnée sur ladite première partie 22a du PCB (Fig. 2g). L'entretoise 30 est également pourvue d'ouvertures 31 qui permettent le passage des écrous 6, ainsi que d'une cavité 32 dimensionnée pour recevoir le moteur 19, de sorte que l'entretoise 30 puisse être installée en contact avec la première partie 22a du PCB. L'entretoise 30 et le module moteur 14 sont ensuite solidarisés à la plaque de support 4 par des vis 33 vissés dans les écrous 6. La partie pliante 22b du PCB est maintenant pliée de manière à couvrir l'entretoise 30 et fixée par des vis 34 (Fig. 2h). Le connecteur 13 de la cellule photovoltaïque est branché dans une prise du PCB 22. Après le montage des aiguilles 3, l'assemblage du mouvement 1 représenté à la figure 1 est complète.

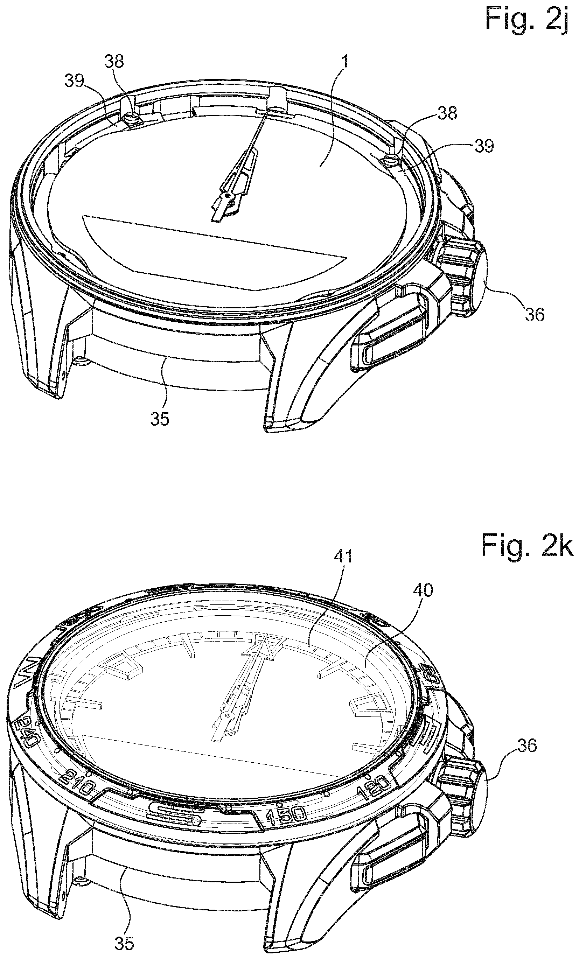

Ce mouvement est ensuite installé dans la carrure 35 d'une montre, voir figures 2i et 2j. La carrure 35 comprend la couronne 36 de la montre reliée à un connecteur 37 qui sera branché dans une prise du PCB 22. L'ensemble des deux plaques 4 et 18 est attaché à la carrure 35 par des vis 38 et brides 39, les vis 38 étant vissés dans les encoches rondes 10 à la périphérie des plaques 4 et 18. L'assemblage de la montre est complété par le montage d'un anneau d'indexage 40 et d'une lunette 41 (figure 2k).

L'invention n'est pas limitée à la forme d'exécution représentée aux figures. Par exemple, l'invention couvre également des formes d'exécution qui ne sont pas pourvues d'un écran digital 5. La cellule photovoltaïque 2, le moteur 19, le PCB 22 et la carrure 34 peuvent être réalisés selon l'une quelconque parmi plusieurs modes de réalisation connus dans l'état de la technique. Le module moteur n'est qu'un exemple d'un module électrique utilisable dans une montre selon l'invention. D'autres modules utilisables pour une montre digitale (sans aiguilles) selon l'invention ne comprennent pas de moteur, mais seulement des composants microélectroniques. Pour être utilisable dans l'invention, il suffit que le module électrique 14 comprenne une surface plane, à installer contre la surface inférieure de la plaque de support 4. Selon la forme d'exécution des figures, la 'surface plane' est la surface de la plaque 18 qui est opposée à la surface à laquelle le moteur 19 est attaché. De plus, et de manière générale, le module électrique doit être pourvu d'ouvertures qui permettent le passage des écrous 6. Dans le cas de la forme d'exécution des figures, les ouvertures 23 traversent la deuxième plaque 18 et la première partie du PCB 22.

Dans n'importe quelle forme d'exécution selon l'invention, les écrous 6 permettent l'assemblage d'un mouvement d'horlogerie à une cellule photovoltaïque sans nécessiter un support latéral. L'assemblage est facile à dégager en dévissant les vis 33. Selon des formes d'exécution préférées, et comme il est le cas aussi dans la forme représentée aux figures, les écrous 6 sont positionnés d'une manière spécifique sur la surface de la plaque de support 4. Un premier groupe d'écrous se trouve à proximité de la périphérie de la plaque 4, et un deuxième groupe se trouve plus centralement sur la plaque, à proximité du moteur 19 quand le module moteur 14 est assemblé à la plaque de support 4. Les écrous centraux vont améliorer la solidarité de l'ensemble comprenant la plaque de support 4 et le module moteur 14, et prévenir une décohésion de ces composants en cas de chocs. Ceci diminue également le risque de déchasser les aiguilles, ce qui permet d'usiner un trou central dans la cellule le plus proche du diamètre du canon de l'aiguille d'heure pour optimiser l'esthétisme du visage de la montre.

## Revendications

1. Mouvement (1) d'une montre électronique comportant une cellule photovoltaïque (2) et un module électrique (14), ledit module comprenant une surface plane, et dans lequel :
- le mouvement comprend en outre une première plaque de support rigide (4),
- la cellule photovoltaïque (2) est fixée à la surface supérieure de la plaque de support (4),
- la plaque de support (4) est pourvue d'une pluralité d'écrous (6) montés sur sa surface inférieure,
- la surface plane du module électrique (14) est montée en contact avec ladite surface inférieure de la plaque de support (4), le module électrique étant pourvu d'une pluralité d'ouvertures (23) dont la position et les dimensions correspondent à celles des écrous (6), de sorte que les écrous (6) passent à travers les ouvertures (23),
- le module électrique (14) et la plaque de support (4) sont solidarisés entre eux par une pluralité de vis (33), vissés dans les écrous (6),
- le module électrique (14) comportant une deuxième plaque de support (18) pourvue desdites ouvertures (23), et dans lequel la surface plane du module électrique (14) est une des surfaces de la deuxième plaque de support (18) qui est positionnée dos-à-dos par rapport à la première plaque de support (4),
un premier groupe d'écrous (6) étant positionné à proximité de la périphérie de la plaque de support (4), et un deuxième groupe d'écrous étant positionné plus centralement par rapport à la périphérie que le premier groupe, et la première et la deuxième plaque de support (4,18) ayant des pourtours identiques.

2. Un mouvement d'horlogerie la revendication 1, comportant une entretoise (30) positionnée sur la deuxième plaque de support (18) du côté opposé à la cellule photovoltaïque (2), et également pourvue d'ouvertures (31) qui permettent le passage des écrous (6), de sorte que l'entretoise (30) et les deux plaques de support (4,18) sont solidarisés entre eux par les vis (33) vissés dans les écrous (6).

3. Un mouvement d'horlogerie selon la revendication 1 ou 2, comprenant des aiguilles (3), et dans lequel le module électrique (14) comporte un moteur électrique (19) monté sur la deuxième plaque de support (18) de l'autre côté de la première plaque de support (4), le moteur comportant les axes de rotation (20) des aiguilles qui sont accessibles par des trous centraux (8,15,24) alignés et alignés entre eux, lesdits trous étant pourvus respectivement dans la cellule photovoltaïque (2), et dans les deux plaques de support (4,18).

4. Un mouvement d'horlogerie selon la revendication 3, comprenant une entretoise (30) pourvue d'une cavité (32) qui permet de recevoir le moteur (19).

5. Un mouvement d'horlogerie selon l'une, quelconque, des revendications précédentes, comportant un écran digital (5), et dans lequel la première plaque de support (4) est pourvue d'une fenêtre (7) adaptée aux dimensions de l'écran (5).

6. Une montre électronique selon l'une, quelconque, des revendications précédentes, dans lequel la cellule photovoltaïque (2) comprend un substrat en verre ou en un autre matériau fragile.

7. Une montre électronique comportant une carrure (35) dans lequel un mouvement (1) selon l'une, quelconque, des revendications précédentes est installé.

## Patentansprüche

1. Uhrwerk (1) einer elektronischen Uhr, das eine Photovoltaikzelle (2) und ein elektrisches Modul (14) umfasst, wobei das Modul eine ebene Oberfläche aufweist und wobei:
- das Uhrwerk ferner eine erste starre Trägerplatte (4) umfasst,
- die Photovoltaikzelle (2) an der Oberseite der Trägerplatte (4) befestigt ist,
- die Trägerplatte (4) mit einer Vielzahl von Muttern (6) versehen ist, die an ihrer Unterseite angebracht sind,
- die ebene Fläche des elektrischen Moduls (14) in Kontakt mit der genannten Unterseite der Trägerplatte (4) montiert ist, wobei das elektrische Modul mit einer Vielzahl von Öffnungen (23) versehen ist, deren Position und Abmessungen denen der Muttern (6) entsprechen, so dass die Muttern (6) durch die Öffnungen (23) hindurchragen,
- das elektrische Modul (14) und die Trägerplatte (4) durch eine Vielzahl von Schrauben (33) miteinander verbunden sind, die in die Muttern (6) eingeschraubt sind,
- das elektrische Modul (14) eine zweite Trägerplatte (18) aufweist, die mit den genannten Öffnungen (23) versehen ist, und wobei die ebene Fläche des elektrischen Moduls (14) eine der Flächen der zweiten Trägerplatte (18) ist, die Rücken an Rücken zur ersten Trägerplatte (4) positioniert ist,
wobei eine erste Gruppe von Muttern (6) in der Nähe des Umfangs der Trägerplatte (4) angeordnet ist und eine zweite Gruppe von Muttern im Vergleich zur ersten Gruppe weiter vom Umfang entfernt angeordnet ist, und wobei die erste und die zweite Trägerplatte (4, 18) identische Umrisse aufweisen.

2. Ein Uhrwerk nach Patentanspruch 1, das einen Abstandhalter (30) umfasst, der auf der zweiten Trägerplatte (18) auf der der Photovoltaikzelle (2) gegenüberliegenden Seite positioniert ist und ebenfalls mit Öffnungen (31) versehen ist, die den Durchgang der Muttern (6) ermöglichen, sodass der Abstandhalter (30) und die beiden Trägerplatten (4, 18) durch die in die Muttern (6) eingeschraubten Schrauben (33) miteinander verbunden sind.

3. Ein Uhrwerk gemäß Patentanspruch 1 oder 2, das Zeiger (3) umfasst und bei dem das elektrische Modul (14) einen Elektromotor (19) aufweist, der auf der zweiten Trägerplatte (18) auf der der ersten Trägerplatte (4) gegenüberliegenden Seite montiert ist, wobei der Motor die Drehachsen (20) der Zeiger aufweist, die durch zentrierte, miteinander fluchtende Löcher (8, 15, 24) zugänglich sind, wobei die genannten Löcher jeweils in der Photovoltaikzelle (2) und in den beiden Trägerplatten (4, 18) vorgesehen sind.

4. Uhrwerk nach Patentanspruch 3, umfassend einen Abstandhalter (30), der mit einer Aussparung (32) versehen ist, die die Aufnahme des Motors (19) ermöglicht.

5. Ein Uhrwerk gemäß einem der vorstehenden Patentansprüche, das ein digitales Display (5) umfasst und bei dem die erste Trägerplatte (4) mit einem Fenster (7) versehen ist, das an die Abmessungen des Displays (5) angepasst ist.

6. Eine elektronische Uhr gemäß einem der vorstehenden Patentansprüche, bei der die Photovoltaikzelle (2) ein Substrat aus Glas oder einem anderen zerbrechlichen Material umfasst.

7. Eine elektronische Uhr mit einem Gehäuse (35), in dem ein Uhrwerk (1) gemäß einem der vorstehenden Patentansprüche eingebaut ist.

## Claims

1. Electronic watch movement (1) comprising a photovoltaic cell (2) and an electrical module (14), said module comprising a flat surface, and in which:
- the movement further comprises a first rigid support plate (4),
- the photovoltaic cell (2) is fixed to the upper surface of the support plate (4),
- the support plate (4) is provided with a plurality of nuts (6) mounted on the lower surface thereof,
- the flat surface of the electrical module (14) is mounted in contact with said lower surface of the support plate (4), the electrical module being provided with a plurality of openings (23) whose position and dimensions correspond to those of the nuts (6), so that the nuts (6) pass through the openings (23),
- the electrical module (14) and the support plate (4) are secured to each other by a plurality of screws (33), screwed into the nuts (6),
- the electrical module (14) comprises a second support plate (18) provided with said openings (23), and wherein the flat surface of the electrical module (14) is one of the surfaces of the second support plate (18) which is positioned back-to-back with respect to the first support plate (4),
a first group of nuts (6) being positioned in proximity to the periphery of the support plate (4), and a second group of nuts being positioned more centrally with respect to the periphery than the first group and the first and second support plates (4, 18) having identical circumferences.

2. A timepiece movement according claim 1 claims, comprising a spacer (30) positioned on the second support plate (18) on the opposite side to the photovoltaic cell (2), and also provided with openings (31) which allow the passage of the nuts (6), so that the spacer (30) and the two support plates (4, 18) are secured to each other by the screws (33) screwed into the nuts (6).

3. A timepiece movement according to claim 1 or 2, comprising hands (3), and wherein the electrical module (14) includes an electrical motor (19) mounted on the second support plate (18) on the other side of the first support plate (4), the motor comprising the rotating hand arbors (20) which are accessible through central holes (8, 15, 24) aligned with each other, said holes being respectively provided in the photovoltaic cell (2) and in the two support plates (4, 18).

4. A timepiece movement according to claim 3, comprising a spacer (30) provided with a cavity (32) which can accommodate the motor (19).

5. A timepiece movement according to any of the preceding claims, comprising a digital screen (5) and wherein the first support plate (4) is provided with a window (7) adapted to the dimensions of the screen (5).

6. An electronic watch according to any of the preceding claims, wherein the photovoltaic cell (2) includes a substrate made of glass or another fragile material.

7. An electronic watch comprising a case middle (35) in which a movement (1) according to any of the preceding claims is installed.
